(19) Europäisches Patentamt
European Patent Office
Office européen des brevets

(11) **EP 2 190 682 B1**

(12) **EUROPÄISCHE PATENTSCHRIFT**

(45) Veröffentlichungstag und Bekanntmachung des Hinweises auf die Patenterteilung:
**20.12.2017 Patentblatt 2017/51**

(21) Anmeldenummer: **08803468.1**

(22) Anmeldetag: **01.09.2008**

(51) Int Cl.:
**B60C 23/06** (2006.01)

(86) Internationale Anmeldenummer:
**PCT/EP2008/061486**

(87) Internationale Veröffentlichungsnummer:
**WO 2009/030660 (12.03.2009 Gazette 2009/11)**

(54) **VERFAHREN ZUR INDIREKTEN REIFENDRUCKÜBERWACHUNG UND REIFENDRUCKÜBERWACHUNGSSYSTEM**

METHOD FOR INDIRECT TIRE PRESSURE MONITORING AND TIRE PRESSURE MONITORING SYSTEM

PROCÉDÉ DE SURVEILLANCE INDIRECTE DE LA PRESSION DE PNEUMATIQUES ET SYSTÈME DE SURVEILLANCE DE LA PRESSION DE PNEUMATIQUES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **03.09.2007 DE 102007041619**
**20.08.2008 DE 102008038579**

(43) Veröffentlichungstag der Anmeldung:
**02.06.2010 Patentblatt 2010/22**

(73) Patentinhaber: **Continental Teves AG & Co. OHG 60488 Frankfurt (DE)**

(72) Erfinder:
• **FISCHER, Daniel**
**65824 Schwalbach (DE)**
• **IRTH, Markus**
**55252 Mainz-kastel (DE)**
• **KÖBE, Andreas**
**64625 Bensheim (DE)**
• **SUSSMANN, Christian**
**61250 Usingen (DE)**

(56) Entgegenhaltungen:
**EP-A- 1 640 189    US-A- 5 553 491**

**Beschreibung**

Die Erfindung betrifft ein Verfahren gemäß Oberbegriff von Anspruch 1 und ein Reifendrucküberwachungssystem gemäß Oberbegriff von Anspruch 15.

In modernen Kraftfahrzeugen finden vermehrt Systeme Anwendung, welche zu einem aktiven oder passiven Schutz der Insassen beitragen. Systeme zur Reifendrucküberwachung schützen die Fahrzeuginsassen vor Fahrzeugschäden, welche beispielsweise auf einen abnormalen Reifenluftdruck zurückzuführen sind. Durch einen abnormalen Reifenluftdruck können sich beispielsweise der Reifenverschleiß und der Kraftstoffverbrauch erhöhen oder es kann zu einem Reifendefekt ("Reifenplatzer") kommen. Es sind bereits verschiedene Reifendrucküberwachungssysteme bekannt, welche entweder auf Basis direkt messender Sensoren arbeiten oder durch Auswertung von Drehzahl- oder Schwingungseigenschaften der Fahrzeugräder einen abnormalen Reifendruck erkennen.

Aus der DE 100 58 140 A1 ist ein so genanntes indirekt messendes Reifendrucküberwachungssystem bekannt, welches durch Auswertung der Raddrehbewegung einen Reifendruckverlust detektiert (DDS: Deflation Detection System).

Aus der EP 0 578 826 B1 ist ein Reifendruckmesser bekannt, welcher auf Basis von Reifenschwingungen einen Druckverlust in einem Reifen ermittelt, wobei aus den Reifenschwingungen mindestens eine Resonanzfrequenzkomponente extrahiert wird.

Ein Verfahren zur indirekten Reifendrucküberwachung wird in der Patentanmeldung DE 10 2005 004 910 A1 offenbart, welches ein auf der Auswertung der Raddrehbewegung basierendes indirekt messendes Reifendrucküberwachungssystem unter Berücksichtigung der Torsionseigenfrequenz der Reifen verbessert.

In der US 5 553 491 wird ein indirekt messendes Reifendruckerkennungssystem beschrieben, das die Vibrationsfrequenzen an den Reifen eines fahrenden Fahrzeugs analysiert. Die einzelnen Frequenzen des erhaltenen Frequenzspektrums werden dabei hinsichtlich ihrer Verstärkung untersucht und in verschiedene Frequenzbänder eingeordnet. Anhand der erhaltenen Verstärkungsverteilung wird eine Resonanzfrequenz geschätzt, bei der die Verstärkung ein Maximum annimmt. Auf Basis der Frequenzposition der Resonanzfrequenz wird dann der Reifendruck eines Fahrzeugreifens ermittelt.

Die EP 1 640 189 A2 offenbart eine Vorrichtung, die feststellt, ob gleichartige oder unterschiedliche Reifen an einem Fahrzeug angebracht sind. Dazu wird die Steigung des Radschlupfs in Abhängigkeit des an den Antriebsrädern anliegenden Drehmoments analysiert. Weiterhin wird eine Vorrichtung offenbart, die auch bei unterschiedlichen montierten Reifen über ein indirektes Messverfahren einen Druckverlust in einem Fahrzeugreifen feststellen kann.

Bei aus dem Stand der Technik bekannten indirekten Reifendrucküberwachungssystemen wird oftmals eine Frequenzanalyse der Radgeschwindigkeit der einzelnen Räder zur Erkennung eines radindividuellen Minderluftdrucks durchgeführt. Hierzu wird üblicherweise die vom Luftdruck abhängige Torsionseigenschwingung des Reifens zur Luftdrucküberwachung herangezogen. Durch einen Druckverlust verändert sich die Eigen- bzw. Resonanzfrequenz der torsionalen Schwingung zwischen Felge und Gürtel, da sich die torsionale Federkonstante zwischen Gürtel und Felge bei verringertem Druck im Reifen verringert. Anhand einer Änderung/Verringerung einer Eigen- bzw. Resonanzfrequenz wird so auf einen Druckverlust geschlossen und eine entsprechende Warnung ausgegeben. Jedoch wird die Eigen- bzw. Resonanzfrequenz nicht nur durch einen sich ändernden Reifendruck, sondern auch durch weitere Störgrößen verändert. Dies kann bei einer Nichtbeachtung dieser Einflüsse zu Fehlwarnungen oder aber ausbleibenden berechtigten Warnungen führen.

Aufgabe der Erfindung ist es daher, ein verbessertes Verfahren zur indirekten Reifendrucküberwachung auf Basis einer Analyse des Schwingungsverhaltens eines Rades bereitzustellen, in welchem die Druckverlusterkennung beeinflussende Störeinflüsse, wie z.B. Änderungen des Fahrbahnreibwerts und/oder Änderungen der Radlast und/oder Änderungen der Fahrgeschwindigkeit, berücksichtigt werden.

Diese Aufgabe wird erfindungsgemäß durch das Verfahren nach Anspruch 1 gelöst.

Unter dem Begriff "Winkelgeschwindigkeit" wird erfindungsgemäß eine Verallgemeinerung des Begriffs verstanden. So werden unter dem Begriff auch alle anderen Drehbewegungsgrößen verstanden, welche direkt mit der Winkelgeschwindigkeit verknüpft sind, wie z.B. Umlaufzeit, Drehzahl oder Drehgeschwindigkeit.

Der Erfindung liegt der Gedanke zugrunde, bei einem Reifendrucküberwachungsverfahren, welches anhand einer Druckverlusterkennungsgröße einen Druckverlust erkennt, eine Kenngröße zu berücksichtigen, welche eine Steigung einer Raddrehmoment-Schlupf-Kurve repräsentiert oder von einer Steigung einer Raddrehmoment-Schlupf-Kurve abhängt. Dabei wird die Kenngröße zumindest teilweise aus dem Schwingungsverhalten des Rades bestimmt.

Bevorzugt wird eine Analyse des Torsionsschwingungsverhaltens des Rades durchgeführt, um die Kenngröße und/oder die Druckverlusterkennungsgröße zu bestimmen. Die Analyse wird besonders bevorzugt anhand einer Frequenzanalyse des Drehzahlsignals des Rades durchgeführt, in welcher eine Resonanzfrequenz und/oder zumindest ein Amplitudenwert eines Frequenzspektrums, vorteilhafterweise der Verlauf des Frequenzspektrums in zumindest einem Frequenzbereich, bestimmt wird. Alternativ oder zusätzlich ist es besonders bevorzugt, die Analyse anhand eines Modells mit Parametern durchzuführen, wobei durch Auswertung des gemessenen Raddrehzahlsignals die Parameter des Modells bestimmt werden, aus welchen dann die Kenngröße und/oder die Druckverlusterkennungsgröße ermittelt wird/werden.

Bevorzugt entspricht die Kenngröße einem Quotienten aus einer Steigung einer Raddrehmoment-Schlupf-Kurve und einer Fahrzeuggeschwindigkeit, da so neben der Steigung der Raddrehmoment-Schlupf-Kurve, welche von der Radlast und dem Reibwert zwischen Fahrbahn und Reifen abhängt, auch die Fahrzeuggeschwindigkeit berücksichtigt wird.

Gemäß einer Alternative des erfindungsgemäßen Verfahrens wird die Kenngröße dadurch berücksichtigt, dass mit der Kenngröße eine Korrektur der Druckverlusterkennungsgröße durchgeführt wird. So werden die in der Kenngröße enthaltenen Störeinflüsse aus der Druckverlusterkennungsgröße herausgerechnet. Eine Bewarnung wird dann anhand der korrigierten, ungestörten Druckverlusterkennungsgröße durchgeführt, wodurch Fehlwarnungen weitestgehend vermieden werden.

Alternativ oder zusätzlich wird erfindungsgemäß die Bestimmung der Druckverlusterkennungsgröße in Abhängigkeit der bestimmten Kenngröße durchgeführt. So wird vorteilhafterweise bei einem kleinen Wert der Kenngröße (kleiner als ein erster vorgegebener Schwellenwert) eine Resonanzfrequenz in einem ersten vorgegebenen Frequenzbereich als Druckverlusterkennungsgröße herangezogen und bei einem großen Wert der Kenngröße (größer als ein zweiter vorgegebener Schwellenwert) eine Resonanzfrequenz in einem zweiten vorgegebenen Frequenzbereich als Druckverlusterkennungsgröße herangezogen. So ist eine situationsangepasste Druckverlusterkennung möglich, welche zu einer zuverlässigeren Bewarnung führt.

Die Kenngröße wird bevorzugt aus einem Verhältnis zweier Maßgrößen bestimmt, wobei die eine Maßgröße den Energieinhalt des Schwingungsverhaltens des Rades bei einer ersten Resonanzfrequenz oder in einem Frequenzbereich einer ersten Resonanzfrequenz und die andere Maßgröße den Energieinhalt des Schwingungsverhaltens des Rades bei einer zweiten Resonanzfrequenz oder in einem Frequenzbereich einer zweiten Resonanzfrequenz darstellt. Die Bildung eines Energieverhältnisses bietet den Vorteil, dass das Energieverhältnis unabhängig von dem absoluten Energieinhalt des Spektrums ist. Je nach Fahrgeschwindigkeit und Fahrbahnbeschaffenheit kann die absolute Energie nämlich sehr unterschiedlich sein.

Gemäß einer Weiterbildung der Erfindung wird eine Frequenzanalyse des Schwingungsverhaltens des Rades durchgeführt und die Kenngröße aus dem ermittelten Frequenzspektrum bestimmt. Besonders bevorzugt wird hierzu eine diskrete Fouriertransformation des Winkelgeschwindigkeitssignals des Rades durchgeführt. Derartige Frequenzanalyse-Methoden bzw. Fouriertransformationsverfahren sind an sich aus dem Stand der Technik bekannt und können leicht z.B. in der elektronischen Kontrolleinheit eines Bremsensteuergerätes durchgeführt werden.

Die Kenngröße wird bevorzugt aus dem Verhältnis der Amplitudenwerte des Frequenzspektrums bei zwei vorgegebenen oder bestimmten Resonanzfrequenzen bestimmt. Hierzu muss also das Frequenzspektrum (Amplitude des Frequenzspektrums) nur in dem Bereich der Resonanzfrequenzen bestimmt werden, eine Ermittlung des Frequenzspektrums in einem großen Frequenzbereich ist nicht unbedingt notwendig, wodurch der Rechenaufwand und/oder der Speicherplatz reduziert werden können.

Alternativ wird die Kenngröße bevorzugt aus dem Verhältnis der Energieinhalte des Frequenzspektrums in den Bereichen zweier vorgegebener oder bestimmter Frequenzbereiche bestimmt. Der Energieinhalt des Frequenzspektrums in einem Frequenzbereich wird besonders bevorzugt durch numerische Integration der Amplitude des Frequenzspektrums über den Frequenzbereich berechnet. Die Berücksichtigung eines Frequenzbereichs, anstelle einer einzelnen Resonanzfrequenz, bietet den Vorteil einer Mittelung, so dass ein einzelner Amplitudenwert, der z.B. fehlerhaft ist, die Bestimmung der Kenngröße nicht so stark beeinflusst.

Gemäß einer anderen Weiterbildung der Erfindung wird die Kenngröße aus dem zeitlichen Verlauf eines Winkelgeschwindigkeitssignals des Rades bestimmt, besonders bevorzugt durch Filterung des Signals mit mindestens einem Bandpassfilter. So ist eine aufwändige Fourier-Analyse des Signals nicht notwendig, und die Bestimmung der Kenngröße kann kostengünstiger realisiert werden.

Das Winkelgeschwindigkeitssignal des Rades wird bevorzugt mit mindestens zwei Bandpassfiltern gefiltert, wobei die Grenzfrequenzen des einen Filters um eine erste vorgegebene oder bestimmte Resonanzfrequenz und die Grenzfrequenzen des anderen Filters um eine zweite vorgegebene oder bestimmte Resonanzfrequenz liegen. Die Kenngröße wird dann aus dem Verhältnis der Varianzen der beiden gefilterten Signale bestimmt, da die Varianz ein Maß für den Energieinhalt des Schwingungsverhaltens des Rades in dem betrachteten Frequenzband darstellt.

Die Resonanzfrequenzen bzw. die Frequenzbereiche werden bevorzugt zuerst in Form von fest vorgegebenen Defaultwerten vorgegebenen. Durch Auswertung der bestimmten Frequenzspektren werden dann genauere bzw. verbesserte Resonanzfrequenzen bzw. Frequenzbereiche bestimmt und für die weitere Bestimmung der Kenngröße herangezogen.

Gemäß einer anderen Weiterbildung der Erfindung wird eine modellbasierte Analyse des Schwingungsverhaltens des Rades durchgeführt, wobei durch Parameterschätzung zumindest ein Parameter des zugrundeliegenden Modells oder der zugrundeliegenden modellbasierten Gleichung bestimmt wird. Die Kenngröße wird dabei aus dem/den bestimmten Parameter(n) bestimmt.

Ebenso ist es bevorzugt, dass zur Druckverlusterkennung eine Druckverlusterkennungsgröße herangezogen wird, welche einem Parameter des Modells entspricht oder aus dem/den Parameter(n) des Modells bestimmt wird. Durch eine Bestimmung der Parameter des Modells können so zusammengehörige Wertepaare von Kenngröße und Druckverlusterkennungsgröße bestimmt werden.

Gemäß einer anderen bevorzugten Ausführungsform des erfindungsgemäßen Verfahrens basiert die Druckverlusterkennung auf einer anhand der Frequenzanalyse bestimmten Resonanzfrequenz als Druckverlusterkennungsgröße.

Die Frequenzspektren werden bevorzugt in Abhängigkeit von der Kenngröße ausgewertet, um die Störgrößen zu berücksichtigen. Besonders bevorzugt werden sie in Intervallen der Kenngröße (Kennwertklassen) ausgewertet, um den Auswerteaufwand zu verringern.

Bevorzugt wird für jedes ermittelte Frequenzspektrum ein Wert der Kenngröße bestimmt. Die ermittelten Frequenzspektren mit Werten der Kenngröße, welche innerhalb eines vorgegebenen Wertebereichs liegen (eine Kennwertklasse), werden dann gemittelt und aus dem gemittelten Frequenzspektrum wird eine Druckverlusterkennungsgröße bestimmt. So werden zusammengehörige Wertepaare von Kenngröße und Druckverlusterkennungsgröße bestimmt, welche besonders bevorzugt als Vergleichswerte zur Druckverlusterkennung und/oder zur Bestimmung einer Korrektur für die Druckverlusterkennungsgröße herangezogen werden.

Anhand des Wertes der Kenngröße wird bevorzugt entschieden, ob die zugehörige Druckverlusterkennungsgröße zur Druckverlustüberwachung herangezogen wird oder nicht.

Gemäß einer Weiterbildung des erfindungsgemäßen Verfahrens werden in einer Einlernphase Wertepaare für die Kenngröße und die Druckverlusterkennungsgröße eingelernt. Diese dienen dann als Vergleichswerte in einer anschließenden Druckverlustüberwachungsphase. In der Druckverlustüberwachungsphase werden aktuell bestimmte Wertepaare mit den Vergleichswerten verglichen, um einen Reifendruckverlust zu erkennen. Vorteilhafterweise werden für gleichen Wert der Kenngröße (oder gleiche Kennwertklasse) der eingelernte Vergleichswert der Druckverlusterkennungsgröße mit dem aktuellen Wert der Druckverlusterkennungsgröße verglichen. Weichen beide Werte um einen vorgegebenen Schwellenwert von einander ab, so wird eine Warnung ausgegeben. Durch den Vergleich von Druckverlusterkennungsgröße mit ähnlichen Kenngrößen können Fehlwarnungen verhindert werden.

Gemäß einer anderen Weiterbildung des erfindungsgemäßen Verfahrens werden in einer Einlernphase Wertepaare für die Kenngröße und die Druckverlusterkennungsgröße eingelernt und aus den Wertepaaren ein funktionaler Zusammenhang zwischen zumindest der Kenngröße und der Druckverlusterkennungsgröße bestimmt. In der anschließenden Druckverlustüberwachungsphase werden aktuell bestimmte Druckverlusterkennungsgrößen anhand des funktionalen Zusammenhangs korrigiert. So werden durch die Berücksichtigung der Kenngröße Fehlwarnungen verhindert.

Die bestimmte Kenngröße wird bevorzugt zur Ermittlung einer Steigung der Raddrehmoment-Schlupf-Kurve ausgewertet. Hierzu wird besonders bevorzugt die Fahrzeuggeschwindigkeit, welche in einem Fahrzeugsteuersystem üblicherweise bestimmt wird (z.B. auf dem CAN-Bus verfügbar), berücksichtigt. Bevorzugt wird aus der Steigung, z.B. zusammen mit anderen Informationen oder Daten, eine Änderung der Reibwertes zwischen Fahrbahn und Reifen und/oder eine Beladungsänderung des Fahrzeuges erkannt.

Ein Vorteil des erfindungsgemäßen Verfahrens liegt darin, dass eine zuverlässige, radindividuelle Reifendruckverlustüberwachung möglich ist. Einflüsse von Störgrößen auf die Druckverlusterkennung werden minimiert.

Die Erfindung betrifft auch ein Reifendrucküberwachungssystem, in welchem ein vorstehend beschriebenes Verfahren durchgeführt wird.

Weitere bevorzugte Ausführungsformen ergeben sich aus den Unteransprüchen und der nachfolgenden Beschreibung an Hand von Figuren.

Es zeigen schematisch

Fig. 1    ein Flussdiagramm eines ersten Ausführungsbeispiels eines erfindungsgemäßen Verfahrens,

Fig. 2    ein Modell eines Rades,

Fig. 3    einen beispielhaften Zusammenhang zwischen Übertragungsfunktion und Frequenz für verschiedene Werte der Kenngröße,

Fig. 4    beispielhafte Verläufe der Resonanzfrequenz über der Kenngröße,

Fig. 5    eine beispielhafte Beziehung zwischen Amplitudenverhältnis und Kenngröße,

Fig. 6    ein beispielsgemäßes Frequenzspektrum, und

Fig. 7    beispielhafte Abhängigkeiten zwischen Drehmoment und Schlupf.

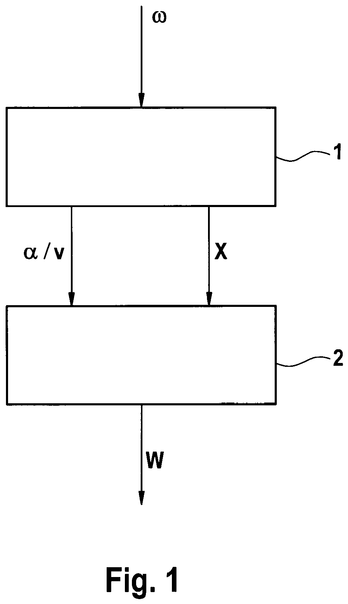

Fig. 1 zeigt schematisch ein Flussdiagramm eines ersten Ausführungsbeispiels eines erfindungsgemäßen Verfahrens. In Block 1 wird anhand eines Raddrehzahlsignals $\omega$ eines Rades eine Analyse des Schwingungsverhaltens des Rades durchgeführt. Aus dem Schwingungsverhalten des Rades werden eine Kenngröße $\alpha/v$, welche von einer Steigung $\alpha$ einer Raddrehmoment-Schlupf-Kurve und der Fahrzeuggeschwindigkeit v abhängt, und eine Druckverlusterkennungsgröße X zur Erkennung eines Druckverlustes an dem Reifen des Rades bestimmt. In Block 2 wird dann unter Berücksichtigung der Kenngröße $\alpha/v$ anhand der Druckverlusterkennungsgröße X überprüft, ob ein Druckverlust vorliegt. Wenn ein Druckverlust erkannt wird, so wird eine Warnung W, z.B. an den Fahrer, ausgegeben.

Beispielhaft wird die vom Reifenluftdruck abhängige Torsionseigenschwingung des Reifens zur Luftdrucküberwachung herangezogen. Außer dem Luftdruck haben aber auch Störgrößen, z.B. Straßenanregungen, einen Einfluss auf diese Schwingung und damit auf die Druckverlusterkennungsgröße X. Dies kann bei einer Nichtbeachtung/Nichtberücksichtigung dieser Einflüsse zu Fehlwarnungen oder aber ausbleibenden berechtigten Warnungen des Reifendruckverlustüberwachungssystems führen.

Die wesentlichen Störgrößen, auf deren Berücksichtigung und Kompensation beispielgemäß eingegangen wird, sind:

- Straßeneinflüsse/Reibwert,
- Geschwindigkeit und
- Beladung.

Die Einflüsse der genannten Störgrößen werden beispielsgemäß auf die Kenngröße $\alpha/v$ zurückgeführt, welche sich als Quotient aus $\alpha$ und v ergibt. Dabei repräsentiert $\alpha$ die Steigung der Drehmoment-Schlupf-Kurve des Reifens im jeweiligen Arbeitspunkt und v steht für die Geschwindigkeit des Fahrzeugs.

Um eine verbesserte Reifendrucküberwachung zu erzielen, wird daher bei der Bestimmung oder der Beurteilung der aus dem Schwingungsverhalten des Reifens bestimmten Druckverlusterkennungsgröße X die Änderungen des $\alpha/v$-Faktors mit berücksichtigt.

Im folgenden werden Ausführungsbeispiele eines erfindungsgemäßen Verfahrens beschrieben, welche entweder die Ermittlung der Kenngröße $\alpha/v$ oder die Berücksichtigung der Kenngröße $\alpha/v$ bei der Druckverlusterkennung betreffen, z.B. die Kompensation der Druckverlusterkennungsgröße X mit der Kenngröße $\alpha/v$ (Herausrechnen der Störeinflüsse).

Gemäß einem zweiten Ausführungsbeispiel wird zur Bestimmung einer Kenngröße $\alpha/v$ eine Frequenzanalyse des Raddrehzahlsignals $\omega$ durchgeführt. Dazu wird das Frequenzspektrum des Raddrehzahlsignals $\omega$ durch eine diskrete Fouriertransformation berechnet. Als Maß für die Kenngröße $\alpha/v$ wird das Energieverhältnis $A_{ratio}$ des Frequenzenergieinhalts $E_1$ um eine untere Eigenfrequenz $f_{Eigen1}$ in Bezug zum Frequenzenergieinhalt $E_2$ um eine obere Eigenfrequenz $f_{Eigen2}$ bestimmt:

$$\alpha/v \sim E_1/E_2 \tag{1}$$

Die Frequenzenergieinhalte $E_1$, $E_2$ werden beispielsgemäß durch numerische Integration des Frequenzspektrums in dem entsprechenden Frequenzbereich um die Eigenfrequenz $f_{Eigen1}$ bzw. $f_{Eigen2}$ bestimmt.

Gemäß einem dritten Ausführungsbeispiel wird das Raddrehzahlsignal $\omega$ mit einem Bandpassfilter mit Grenzfrequenzen um eine untere Eigenfrequenz $f_{Eigen1}$ und um eine hohe Eigenfrequenz $f_{Eigen2}$ gefiltert. Als Maß für die Energie $E_1$ bzw. $E_2$ in den jeweiligen Bereichen wird beispielsgemäß die Varianz des gefilterten Signals herangezogen. Die Kenngröße $\alpha/v$ wird entsprechend Gleichung (1) bestimmt.

In dem zweiten und dritten Ausführungsbeispiel werden Frequenzbereich um zwei Eigenfrequenz $f_{Eigen1}$ und $f_{Eigen2}$ ausgewertet. Die Eigenfrequenzen $f_{Eigen1}$ und $f_{Eigen2}$ und/oder die jeweiligen Frequenzbereiche um die Eigenfrequenz $f_{Eigen1}$ und $f_{Eigen2}$ können entweder fest vorgegeben sein oder vorab durch Messung und/oder Berechnung bestimmt werden. Beispielgemäß werden zunächst vorgegebene Werte als Startwerte angenommen. Zur genaueren/verbesserten Bestimmung, welche Frequenzintervalle zur Berechnung der Energie $E_1$ bzw. $E_2$ herangezogen werden, werden später die bereits gefundenen Resonanzfrequenzen herangezogen.

Gemäß einem vierten Ausführungsbeispiel wird eine modellbasierte Analyse des Schwingungsverhaltens des Rades durchgeführt. Hierzu wird ein Modell angenommen. Durch ein Parameterschätzverfahren werden basierend auf dem Modell die Parameter des zugrundeliegenden Modells bzw. der zugrundeliegenden modellbasierten Gleichung bestimmt. Aus den Koeffizienten wird ein Schätzwert für $\alpha/v$ bestimmt. Ebenso wird die Eigenfrequenz $f_{Eigen1}$, $f_{Eigen2}$ aus den Parametern berechnet, welche dann als Druckverlusterkennungsgröße X verwendet wird.

Z.B. kann ein Modell dritter Ordnung entsprechend der Beschreibung weiter unten (siehe Gleichung (2)) zugrunde gelegt werden. Es werden durch ein Parameterschätzverfahren die Vorfaktoren im Nenner der rechten Seite von Gleichung (2) vor $s^3$, $s^2$ und s bestimmt. Dabei ergeben sich die Werte von $s^3$, $s^2$ und s aus den zeitlichen Ableitungen höherer Ordnung der Winkelgeschwindigkeit $\omega$ und lassen sich somit aus der gemessenen Winkelgeschwindigkeit $\omega$ bestimmen. Die verschiedenen Vorfaktoren enthalten die Kenngröße $\alpha/v$ und stellen ein (nichtlineares) Gleichungssystem dar, wobei die Kenngröße $\alpha/v$ und die Federkonstante c (bzw. der Quotient $c/J_{Felge}$) die zu bestimmenden Größen sind. Durch Lösen des Gleichungssystems werden die gesuchten Größen $\alpha/v$ und c bestimmt.

Eine, z.B. gemäß des zweiten, dritte oder vierten Ausführungsbeispiel, bestimmte Kenngröße $\alpha/v$ wird dann als Kompensationsgröße für eine aus einer Schwingungsanalyse gefundene Druckverlusterkennungsgröße X herangezogen. Beispielsgemäß handelt es sich bei der Druckverlusterkennungsgröße X um eine Resonanzfrequenz $f_{Eigen}$.

Je nachdem, ob die Druckverlusterkennungsgröße X über einen parametrischen (modellbasierten) oder aber einen nicht-parametrischen (Fouriertransformation) Ansatz bestimmt wird, ergeben sich verschiedene, im Folgenden in Form von Ausführungsbeispielen beschriebene Kompensationsmöglichkeiten.

Gemäß einem fünften Ausführungsbeispiel wird zur Analyse des Schwingungsverhaltens des Rades eine Frequenzanalyse der Radgeschwindigkeit $\omega$ durchgeführt. Es wird die vom Luftdruck abhängige Torsionseigenschwingung des Reifens zur Luftdrucküberwachung herangezogen. Durch die Frequenzanalyse wird eine Eigen- bzw. Resonanzfrequenz $f_{Eigen}$ gewonnen, die vom Reifenluftdruck abhängt, und so als Druckverlusterkennungsgröße X verwendet wird. Beispielsgemäß umfasst das Reifendruckverlusterkennungsverfahren eine Lernphase, in welcher die Eigen- oder Resonanzfrequenz $f_{Eigen}^{lern}$ des Reifens bei korrektem bzw. vorgegebenem Luftdruck durch ein Frequenzauswerteverfahren ermittelt und eingelernt wird. Nach dem Einlernen werden in einer Vergleichsphase Veränderungen der Eigenfrequenz $f_{Eigen}$ in Richtung kleinerer Eigenfrequenz überwacht, und bei Überschreitung einer Detektionsschwelle S (d. h. $| f_{Eigen}^{lern} - f_{Eigen} | > S$) wird auf einen Druckverlust geschlossen und der Fahrer informiert.

Beispielsgemäß werden für nicht-parametrische Spektralanalyseverfahren die berechneten Einzelspektren gemäß ihres ermittelten $\alpha/v$-Wertes in $\alpha,/v$-Klassen eingeteilt und in diesen Klassen gefiltert (entspricht einem gefilterten/gemittelten Gesamtspektrum aus mehreren Einzelspektren). Für jede $\alpha/v$-Klasse wird die entsprechende Resonanzfrequenz $f_{Eigen}$ ermittelt und eingelernt ($f_{Eigen}^{lern}$) . In der Vergleichsphase wird eine aktuell bestimmte Eigenfrequenz $f_{Eigen}$ entsprechend ihres $\alpha/v$-Wertes mit der eingelernten Eigenfrequenz $f_{Eigen}^{lern}$ der entsprechenden $\alpha/v$-Klasse verglichen.

Beispielsgemäß wird für kleine Werte von $\alpha/v$ eine obere Resonanzfrequenz $f_{Eigen2}$ als Druckverlusterkennungsgröße X detektiert, für große $\alpha/v$ wird eine untere Resonanzfrequenz $f_{Eigen1}$ als Druckverlusterkennungsgröße X detektiert. In einem Übergangsbereich kann es zu einem nicht auswertbaren Signal kommen, weshalb diese Spektren beispielsgemäß nicht für eine Berechnung einer Druckverlusterkennungsgröße X herangezogen werden.

Gemäß einem sechsten Ausführungsbeispiel werden in einem parametrischen Schätzverfahren die Parameter (Koeffizienten) des Modells dritter Ordnung (siehe unten, Gleichung (2)) geschätzt und neben der Kenngröße $\alpha/v$ die Druckverlusterkennungsgröße X daraus berechnet. Das Wertepaar (Druckverlusterkennungsgröße X, Kenngröße $\alpha/v$) wird in einer Lernphase gemeinsam gelernt und die Parameter einer passenden Kompensationsfunktion g (siehe weiter unten, funktionaler Zusammenhang g) werden ebenfalls mit geschätzt und gelernt. Weitere Merkmale des Kompensationsverfahrens werden weiter unten beschrieben (siehe neuntes Ausführungsbeispiel).

Gemäß einem siebten Ausführungsbeispiel (parametrisches Schätzverfahren) wird das Modell dritter Ordnung aufgeteilt in zwei Modelle zweiter Ordnung, welche sich jeweils für die Grenzfälle $\alpha/v \to 0$ und $\alpha/v \to \infty$ ergeben (siehe z.B. Gleichungen (3) und (5)). Diese Aufteilung bietet den Vorteil eines geringeren Rechenaufwands für die Parameterschätzung als im Fall des Modells dritter Ordnung. Es wird nur eines der beiden Modelle durchgerechnet und aufgrund des errechneten $\alpha/v$-Wertes werden die von diesem Modell ermittelten Druckverlusterkennungsgrößen X verwendet oder verworfen. Bevorzugt wird das Modell für $\alpha/v \to \infty$ herangezogen, da die niedrigere Resonanz bei ca. 50 Hz bei den meisten Fahrbedingungen ausgeprägt ist. Das Modell für $\alpha/v \to 0$ wird dann vernachlässigt.

Gemäß einem achten Ausführungsbeispiel (parametrisches Schätzverfahren) wird das Modell dritter Ordnung aufgeteilt in zwei Modelle zweiter Ordnung, welche sich jeweils für die Grenzfälle $\alpha/v \to 0$ und $\alpha/v \to \infty$ ergeben (siehe z.B. Gleichungen (3) und (5)). Es werden beide Modelle für die Grenzfälle von $\alpha/v$ berechnet und in Abhängigkeit von dem bestimmten $\alpha/v$-Wert wird jeweils die Druckverlusterkennungsgrößen X des einen oder des anderen Modells herangezogen.

Gemäß einem neunten Ausführungsbeispiel wird zumindest eine Kompensation der Druckverlusterkennungsgröße X (bevorzugt der Eigenfrequenz f) bezüglich einer Störgröße Y, z.B. dem Störeinfluss $\alpha/v$, durchgeführt. Das Kompensationsverfahren wird beispielsgemäß bei einem parametrischen oder bei einem nicht-parametrischen Analyseverfahren eingesetzt. Das im Folgenden beschriebene Kompensationsverfahren wird also bevorzugt zusätzlich in den oben beschriebenen beispielhaften Verfahren durchgeführt. Hierbei wird anhand von bestimmten (X, Y)-Wertepaaren ein funktionaler Zusammenhang g (z.B. ein linearer Zusammenhang), speziell die Parameter des angenommenen funktionalen Zusammenhangs g, eingelernt, der die Veränderung der Druckverlusterkennungsgröße X von einer druckabhängigen Lerngröße X0 und dem Störeinfluss Y (z.B. $\alpha/v$) und evtl. weiteren Größen beschreibt:

$$X = g(X0, Y, \ldots)$$

Beispielsgemäß wird aufgrund der einfachen Bestimmbarkeit durch Regression ein linearer Zusammenhang angesetzt:

$$X = X0 + a * Y ,$$

wobei die Parameter X0, a der Geradengleichung, z.B. durch Anfitten der (X, Y)-Wertepaare, in einer Lernphase bestimmt werden. Der Parameter X0 entspricht dann dem eingelernten Vergleichswert für die nachfolgende Vergleichsphase.

Zur Druckverlusterkennung in der Vergleichsphase wird die aktuell ermittelte Druckverlusterkennungsgröße X durch die Umkehrfunktion $g^{-1}$ kompensiert.

Hierzu wird beispielgemäß die aktuell ermittelte Druckverlusterkennungsgröße $X_{aktuell}$ gemäß $X_{komp} = X_{aktuell} - a*Y$ kompensiert und die kompensierte Druckverlusterkennungsgröße $X_{komp}$ mit dem eingelernten Vergleichswert X0 verglichen. Ist die Abweichung [ $X_{komp}$ - X0 größer als eine vorgegeben Schwelle, so wird auf einen Druckverlust erkannt.

Alternativ wird direkt die Größe $X_{aktuell}$ - (X0 + a * Y) berechnet und ein Druckverlust erkannt, wenn die Abweichung von Null größer als eine vorgegeben Schwelle ist.

Gemäß einem zehnten Ausführungsbeispiel wird die ermittelte Kenngröße $\alpha/v$ herangezogen, um auf andere physikalische Größen, wie z.B. den Reibwert Fahrbahn-Reifen und/oder die Beladung, zu schließen.

Die Größe $\alpha$ ist von der Radlast (Beladung) und dem Reibwert der Fahrbahn abhängig. Die Fahrzeuggeschwindigkeit v ist im Fahrzeug bekannt, wonach man aus einer Schätzgröße für $\alpha/v$ auf $\alpha$ selbst schließen kann. Eine Veränderung von $\alpha$ kann in Kombination mit einer zeitlichen Plausibilisierung (z.B. Beladung ändert sich nicht während einer Fahrt) und/oder der Zuhilfenahme von anderen Größen, z.B. Größen aus der Radumfangsanalyse der Reifen (insbesondere des Achsenverhältnisses), dazu verwendet werden, auf die Beladung oder einen Reibwertwechsel zu schließen.

Im Folgenden wird ein beispielsgemäßes Modell erläutert, welches zur Beschreibung einer modellbasierten Analyse des Schwingungsverhaltens eines Rades herangezogen werden kann.

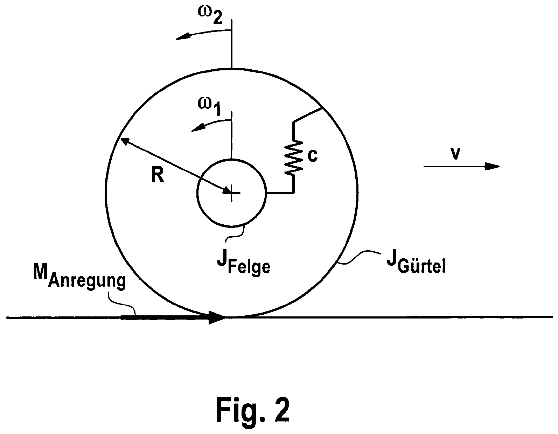

In Fig. 2 ist ein Modell des Rades schematisch dargestellt. Das Rad wird durch das Trägheitsmoment der Felge $J_{Felge}$ und das Trägheitsmoment des Reifengürtels $J_{Gürtel}$ beschrieben. Die torsionale Federkonstante zwischen Gürtel und Felge wird mit c bezeichnet. Die Drehgeschwindigkeit des Gürtels, welche der Drehgeschwindigkeit des Radumfangs entspricht, wird durch die Winkelgeschwindigkeit $\omega_2$ und die Drehgeschwindigkeit der Felge, welche z.B. mit einem Raddrehzahlsensor gemessen wird, wird durch die Winkelgeschwindigkeit $\omega_1$ beschrieben. Der Radius des Reifens wird mit R bezeichnet.

Ein physikalischer Effekt, der bei der Reifendruckverlustüberwachung ausgenutzt wird, ist die Veränderung der Eigen- bzw. Resonanzfrequenz $f_{Eigen}$ der torsionalen Schwingung zwischen Felge und Gürtel durch einen Druckverlust. Diese Veränderung basiert auf der Verringerung der torsionalen Federkonstante c zwischen Gürtel und Felge bei verringertem Druck im Reifen.

Das am Gürtel angreifende Anregungsmoment $M_{Anregung}$ wird modellgemäß durch die folgende Schlupfgleichung beschrieben:

$$M_{Anregung} = \alpha \cdot R \cdot \frac{v - \omega_2 \cdot R}{v}$$

Nach Aufstellen der Differentialgleichungen, Einsetzen der Schlupfgleichung und Überführung in den Frequenzbereich (Laplace-Transformation mit der Laplace-Variablen s) ergibt sich die folgende Übertragungsfunktion G zwischen einem am Gürtel angreifenden Anregungsmoment $M_{Anregung}$ und einer von einem Raddrehzahlsensor messbaren Winkelgeschwindigkeit $\omega_1$ (Gleichung (2)):

$$G = \frac{\omega_1}{M_{Anregung}} = \frac{1}{\frac{J_{Felge} \cdot J_{Gürtel}}{c} \cdot s^3 + \frac{J_{Felge} \cdot R^2}{c} \frac{\alpha}{v} \cdot s^2 + (J_{Felge} + J_{Gürtel}) \cdot s + \frac{R^2 \alpha}{v}}$$

Als konstant für ein Fahrzeug ohne Reifenwechsel und ohne Reifendruckveränderung können das Trägheitsmoment der Felge $J_{Felge}$, des Gürtels $J_{Gürtel}$, der Reifenradius R und die Federkonstante c angenommen werden.

Variabel sind während der Fahrt die Geschwindigkeit v und die Steigung der Drehmoment-Schlupf-Beziehung $\alpha$.

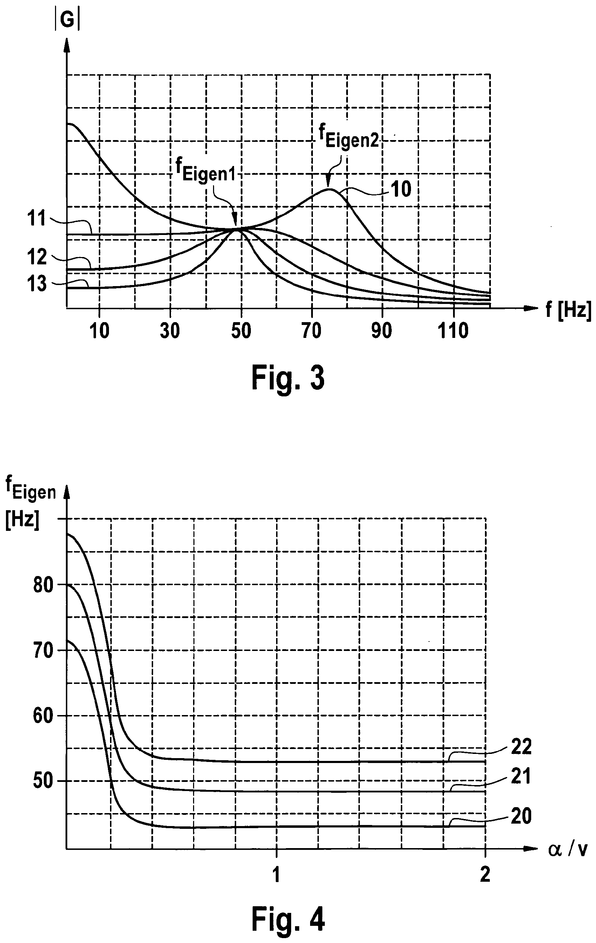

Der Betrag der Übertragungsfunktion |G| des Systems verändert sich als Funktion der Frequenz f (der torsionalen Schwingung) mit variierendem Quotienten $\alpha/v$ entsprechend des in Fig. 3 dargestellten beispielhaften Zusammenhangs. Jede der dargestellten Kurven 10, 11, 12, 13 entspricht einem anderen Wert von $\alpha/v$ (aufsteigende Werte von $\alpha/v$ für die Kurven 10 bis 13). Abhängig von dem Quotienten $\alpha/v$ prägt sich entweder eine Resonanzfrequenz $f_{Eigen1}$ im Bereich von etwa 45 Hz aus oder aber eine Resonanzfrequenz $f_{Eigen2}$ im Bereich von etwa 75 Hz. Bei dem kleinsten dargestellten Wert von $\alpha/v$ (Kurve 10) ist eine ausgeprägte Resonanz bei einer Resonanzfrequenz $f_{Eigen2}$ zu sehen, bei dem größten dargestellten Wert von $\alpha/v$ (Kurve 13) ist eine ausgeprägte Resonanz bei einer Resonanzfrequenz $f_{Eigen1}$ ausgebildet.

Im Grenzfall $\alpha/v$ gegen Null (d.h. hohe Geschwindigkeiten und/oder glatter Untergrund) ergibt sich für die Übertragungsfunktion G folgendes:

$$G \;=\; \frac{\omega_1}{M_{Anregung}} \;=\; \frac{1}{s \cdot \left( \dfrac{J_{Felge} \cdot J_{Gürtel}}{c} \cdot s^2 + (J_{Felge} + J_{Gürtel}) \right)} \tag{3}$$

Die Eigenfrequenz des Systems wird zu (entspricht hoher Eigenfrequenz $f_{Eigen2}$):

$$f_{Eigen2} \;=\; \frac{\sqrt{\dfrac{c\,(J_{Felge} + J_{Gürtel})}{J_{Felge} \cdot J_{Gürtel}}}}{2\pi} \tag{4}$$

Für den anderen Grenzfall $\alpha/v$ gegen Unendlich ergibt sich für die Übertragungsfunktion:

$$G = \frac{\omega_1}{M_{Anregung}} = \frac{c \cdot v}{J_{Felge} \cdot R^2} \cdot \frac{1}{s^2 + \dfrac{(J_{Felge} + J_{Gürtel}) \cdot c \cdot v}{J_{Felge} \cdot R^2 \cdot \alpha} \cdot s + \dfrac{c}{J_{Felge}}} \tag{5}$$

Die Eigenfrequenz des Systems wird zu (entspricht niedriger Eigenfrequenz $f_{Eigen1}$):

$$f_{Eigen1} \;=\; \frac{\sqrt{\dfrac{c}{J_{Felge}}}}{2\pi} \tag{6}$$

Beispielhafte Verläufe der Resonanzfrequenz $f_{Eigen}$ mit der Kenngröße a/v zeigt Fig. 4 schematisch, wobei jede Kurve 20, 21, 22 einem anderen Wert der torsionalen Federkonstanten c, und damit einem anderen Reifendruck, entspricht. Die obere Kurve 22 entspricht der größten Federkonstanten, die untere Kurve 20 entspricht der kleinsten Federkonstanten (aufsteigende Werte von c für die Kurven 20 bis 22).

Für kleine Werte der Kenngröße $\alpha/v$ prägt sich die hohe Eigenfrequenz $f_{Eigen2}$ aus, bei steigendem $\alpha/v$ kommt das System in einen Übergangsbereich, um dann bei noch weiter steigendem $\alpha/v$ die untere Resonanzfrequenz $f_{Eigen1}$ auszuprägen.

Es zeigt sich, dass das Amplitudenverhältnis $A_{ratio}$ der Übertragungsfunktion G an den Eigenfrequenzen $f_{Eigen1}$ und $f_{Eigen2}$

$$A_{ratio} = \frac{\left| G(f_{Eigen1}) \right|}{\left| G(f_{Eigen2}) \right|} \tag{7}$$

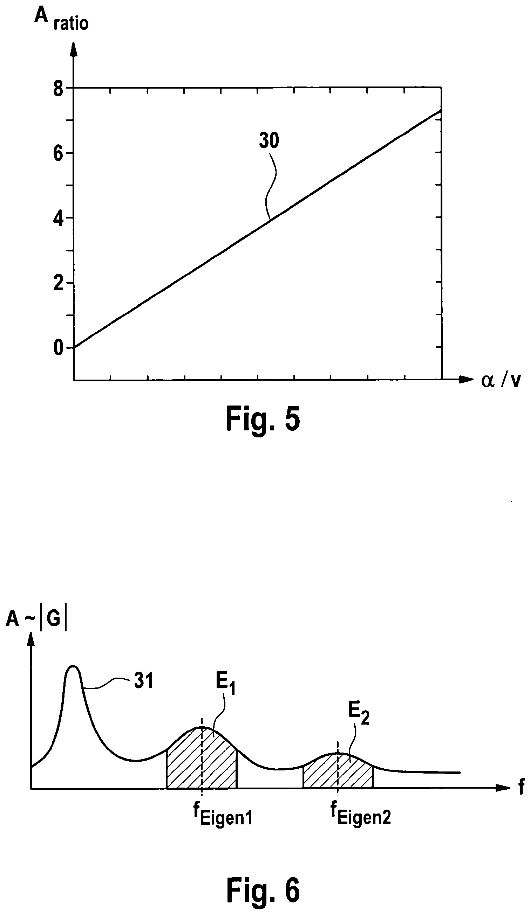

linear von der Kenngröße $\alpha/v$ abhängig ist. In Fig. 5 ist beispielhaft eine lineare Beziehung 30 zwischen Amplitudenverhältnis $A_{ratio}$ und $\alpha/v$ schematisch dargestellt. Die Kenngröße $\alpha/v$ wird also gemäß einem Ausführungsbeispiel aus dem Amplitudenverhältnis $A_{ratio}$ der Übertragungsfunktion an den Eigenfrequenzen $f_{Eigen1}$ und $f_{Eigen2}$ bestimmt.

Ein annähernd linearer Zusammenhang zeigt sich auch, wenn man den Energiegehalt $E_1$, $E_2$ des Spektrums um die jeweilige Eigenfrequenz $f_{Eigen1}$, $f_{Eigen2}$ (anstelle der Übertragungsfunktion an den Eigenfrequenzen) ins Verhältnis setzt:

$$A_{ratio} = \frac{|E_1|}{|E_2|} = \left| \frac{\int_{f_{Eigen1}-\Delta f_1}^{f_{Eigen1}+\Delta f_1} G \cdot df}{\int_{f_{Eigen2}-\Delta f_2}^{f_{Eigen2}+\Delta f_2} G \cdot df} \right| \qquad (8)$$

Beispielsgemäß wird der Energiegehalt durch das Integral über die Übertragungsfunktion G in einem Frequenzbereich berechnet (z.B. die Frequenzbereiche $f_{Eigen1}-\Delta f_1$ bis $f_{Eigen1}+\Delta f_1$ bzw. $f_{Eigen2}-\Delta f_2$ bis $f_{Eigen2}+\Delta f_2$, jedes Frequenzintervall kann aber auch unsymmetrisch um die Eigenfrequenz angeordnet sein).

In Fig. 6 ist schematisch ein beispielsgemäßes Frequenzspektrum (Kurve 31) dargestellt. Die Energiegehalt $E_1$, $E_2$ um die Eigenfrequenz $f_{Eigen1}$, $f_{Eigen2}$ sind schraffiert eingezeichnet.

Da das jeweilige Verhältnis $A_{ratio}$ als annährend linear von der Kenngröße $\alpha/v$ angenommen wird

$$A_{ratio} \propto \frac{\alpha}{v} \quad ,$$

ist es möglich, über die Frequenzamplituden $G(f_{Eigen1})$, $G(f_{Eigen2})$ bei den Eigenfrequenzen oder über die Energien $E_1$, $E_2$ in den jeweiligen Frequenzbereichen (um $f_{Eigen1}$ und $f_{Eigen2}$) auf die Kenngröße $\alpha/v$ zu schließen.

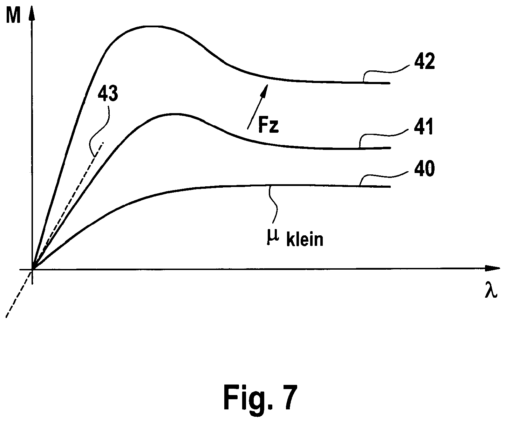

Die Drehmoment-Schlupf-Kurve eines Reifens ist abhängig von dem Reibwert $\mu$ und der Radlast Fz. In Fig. 7 sind schematisch beispielhafte Kurven 40, 41, 42 des Drehmomentes M als Funktion des Schlupfes $\lambda$ bei variierendem Reibwert $\mu$ und Radlast Fz gezeigt. Die Größe $\alpha$ repräsentiert den Anstieg des Drehmoments M in Abhängigkeit der Änderung des Schlupfes $\lambda$ ($\lambda=(v-\omega_2 R)/v$), d.h. die Größe $\alpha$ kann als die Steigung einer Drehmoment-Schlupf-Kurve an einem (Arbeits)Punkt betrachtet werden (die gestrichelte Linie 43 deutet eine Steigung $\alpha$ für Kurve 41 an).

Alle Größen, welche die Größe $\alpha$ verändern, haben einen Einfluss auf die Übertragungsfunktion G und die sich ausprägende (n) Resonanzfrequenz (en) $f_{Eigen1}$, $f_{Eigen2}$.

Ein kleiner Reibwert $\mu_{klein}$ führt in der Regel zu einem kleineren $\alpha$ (Kurve 40 in Fig. 7).

Je nachdem, in welchem Arbeitspunkt (Antriebsmoment/Bremsmoment) man sich auf der Drehmoment-Schlupf Kurve befindet, verändert sich $\alpha$. Für höhere Schlupfwerte $\lambda$ bzw. Drehmomente M sinkt $\alpha$ in der Regel.

Eine erhöhte Radlast Fz (durch einen Pfeil in Fig. 7 angedeutet) führt zu einem steigenden $\alpha$.

## Patentansprüche

1. Verfahren zur indirekten Reifendrucküberwachung, in welchem anhand einer Analyse eines Schwingungsverhaltens eines Rades eines Kraftfahrzeugs eine Druckverlusterkennungsgröße (X, f, c) zur Erkennung eines Druckverlustes an dem Reifen des Rades bestimmt wird, **dadurch gekennzeichnet, dass** eine Kenngröße ($\alpha$, $\alpha/v$) , welche eine Steigung ($\alpha$) einer Raddrehmoment-Schlupf-Kurve repräsentiert oder von einer Steigung ($\alpha$) einer Raddrehmoment-Schlupf-Kurve abhängt ($\alpha/v$), aus dem Schwingungsverhalten des Rades bestimmt wird und dass die Kenngröße ($\alpha$, $\alpha/v$) und die Druckverlusterkennungsgröße (X, f, c) zur Druckverlusterkennung herangezogen werden, wobei in Abhängigkeit von der bestimmten Kenngröße ($\alpha/v$) eine Korrektur der Druckverlusterkennungsgröße (X, f) und/oder eine Bestimmung der Druckverlusterkennungsgröße (X, f) durchgeführt wird.

2. Verfahren nach Anspruch 1, **dadurch gekennzeichnet, dass** die Kenngröße ($\alpha/v$) aus einem Verhältnis ($A_{ratio}$) zweier Maßgrößen bestimmt wird, wobei jede Maßgröße den Energieinhalt ($G(f_{Eigen1})$ , $G(f_{Eigen2})$, $E_1$, $E_2$) des Schwingungsverhaltens des Rades bei einer Frequenz ($f_{Eigen1}$, $f_{Eigen2}$) oder in einem Frequenzbereich ($f_{Eigen1}-\Delta f_1$, $f_{Eigen1}+\Delta f_1$; $f_{Ei-gen2}-\Delta f_2$, $f_{Eigen2}+\Delta f_2$) repräsentiert.

**3.** Verfahren nach mindestens einem der Ansprüche 1 oder 2, **dadurch gekennzeichnet, dass** eine Frequenzanalyse des Schwingungsverhaltens des Rades, insbesondere eines Winkelgeschwindigkeitssignals ($\omega$) des Rades, durchgeführt wird und die Kenngröße ($\alpha$/v) aus einem, insbesondere durch Fouriertransformation, ermittelten Frequenzspektrum (31) bestimmt wird.

**4.** Verfahren nach Anspruch 3, **dadurch gekennzeichnet, dass** die Kenngröße ($\alpha$/v) als ein Verhältnis ($A_{ratio}$)

- der Amplitudenwerte ($G(f_{Eigen1})$ , $G(f_{Eigen2})$) des Frequenzspektrums bei zwei vorgegebenen oder bestimmten Resonanzfrequenzen ($f_{Eigen1}$, $f_{Eigen2}$) , oder
- der Energieinhalte des Frequenzspektrum im Bereich zweier vorgegebener oder bestimmter Frequenzbereiche ($f_{Eigen1}-\Delta f_1$ $f_{Eigen1}+\Delta f_1$; $f_{Eigen2}-\Delta f_2$, $f_{Eigen2}+\Delta f_2$) ,

bestimmt wird.

**5.** Verfahren nach mindestens einem der Ansprüche 1 oder 2, **dadurch gekennzeichnet, dass** die Kenngröße ($\alpha$/v) aus dem zeitlichen Verlauf eines Winkelgeschwindigkeitssignals ($\omega$) des Rades, insbesondere durch Filterung mit mindestens einem Bandpassfilter, bestimmt wird.

**6.** Verfahren nach Anspruch 5, **dadurch gekennzeichnet, dass** das Winkelgeschwindigkeitssignal ($\omega$) des Rades mit mindestens einem Bandpassfilter, dessen Grenzfrequenzen ($f_{Eigen1}-\Delta f_1$, $f_{Eigen1}+\Delta f_1$; $f_{Eigen2}-\Delta f_2$, $f_{Eigen2}+\Delta f_2$) um eine vorgegebene oder bestimmte Resonanzfrequenz ($f_{Eigen1}$, $f_{Eigen2}$) liegen, gefiltert wird, und dass die Kenngröße ($\alpha$/v) aus der Varianz des gefilterten Signals, insbesondere aus einem Verhältnis ($A_{ratio}$) der Varianzen zweier mit Bandpassfiltern unterschiedlicher Grenzfrequenzen gefilterter Signale, bestimmt wird.

**7.** Verfahren nach Anspruch 1, **dadurch gekennzeichnet, dass** eine modellbasierte Analyse des Schwingungsverhaltens des Rades, insbesondere eines Winkelgeschwindigkeitssignals ($\omega$) des Rades, durchgeführt wird, wobei, insbesondere durch Parameterschätzung, zumindest ein Parameter ($J_{Felge}$, $J_{Gürtel}$, c) des zugrundeliegenden Modells oder der zugrundeliegenden modellbasierten Gleichung, bestimmt wird, und dass die Kenngröße ($\alpha$/v) aus dem/den bestimmten Parameter(n) bestimmt wird.

**8.** Verfahren nach mindestens einem der Ansprüche 1 bis 7, **dadurch gekennzeichnet, dass** eine Frequenzanalyse des Schwingungsverhaltens des Rades, insbesondere des Winkelgeschwindigkeitssignals ($\omega$) des Rades, durchgeführt wird und dass die Druckverlusterkennungsgröße (X) eine anhand der Frequenzanalyse bestimmte Resonanzfrequenz ($f_{Eigen}$) ist.

**9.** Verfahren nach Anspruch 8, **dadurch gekennzeichnet, dass** für jedes ermittelte Frequenzspektrum ein Wert der Kenngröße ($\alpha$/v) bestimmt wird und dass Frequenzspektren mit Werten der Kenngröße ($\alpha$/v), welche innerhalb eines vorgegebenen Wertebereichs liegen, gemittelt werden, wobei aus dem gemittelten Frequenzspektrum die Druckverlusterkennungsgröße ($f_{Eigen}$) bestimmt wird.

**10.** Verfahren nach mindestens einem der Ansprüche 1 bis 7, **dadurch gekennzeichnet, dass** eine modellbasierte Analyse des Schwingungsverhaltens des Rades, insbesondere eines Winkelgeschwindigkeitssignals ($\omega$) des Rades, durchgeführt wird, wobei, insbesondere durch Parameterschätzung, zumindest ein Parameter ($J_{Felge}$, $J_{Gürtel}$, c) des zugrundeliegenden Modells oder der zugrundeliegenden modellbasierten Gleichung, bestimmt wird, und dass die Druckverlusterkennungsgröße (X) ein Parameter des Modells (c) ist oder aus dem/den Parameter(n) des Modells bestimmt wird ($f_{Eigen}$) .

**11.** Verfahren nach mindestens einem der Ansprüche 1 bis 10, **dadurch gekennzeichnet, dass** in Abhängigkeit von der Kenngröße ($\alpha$/v) entschieden wird, ob eine Druckverlusterkennungsgröße (X, f, c) zur Druckverlustüberwachung herangezogen wird oder nicht.

**12.** Verfahren nach mindestens einem der Ansprüche 1 bis 11, **dadurch gekennzeichnet, dass** in einer Einlernphase Wertepaare für die Kenngröße ($\alpha$/v) und die Druckverlusterkennungsgröße (X, f, c) als Vergleichswerte eingelernt werden, wobei in einer Druckverlustüberwachungsphase aktuell bestimmte Wertepaare mit diesen Vergleichswerten verglichen werden, um einen Reifendruckverlust zu erkennen.

**13.** Verfahren nach mindestens einem der Ansprüche 1 bis 12, **dadurch gekennzeichnet, dass** in einer Einlernphase Wertepaare für die Kenngröße ($\alpha$/v) und die Druckverlusterkennungsgröße (X, f, c) eingelernt werden, wobei aus den Wertepaaren ein funktionaler Zusammenhang (g) zwischen zumindest der Kenngröße ($\alpha$/v) und der Druckverlusterkennungsgröße (X, f, c) bestimmt wird, und dass in einer Druckverlustüberwachungsphase eine Druckverlusterkennung anhand einer aktuell bestimmten Druckverlusterkennungsgröße (X, f, c) und des bestimmten funktionalen Zusammenhangs (g) durchgeführt wird, insbesondere eine aktuell bestimmte Druckverlusterkennungsgröße (X, f, c) anhand des funktionalen Zusammenhangs (g) korrigiert wird.

14. Verfahren nach mindestens einem der Ansprüche 1 bis 13, **dadurch gekennzeichnet, dass** aus der Kenngröße ($\alpha$/v) eine Steigung ($\alpha$) der Raddrehmoment-Schlupf-Kurve bestimmt wird und anhand der Steigung ($\alpha$) eine Änderung der Reibwertes ($\mu$) zwischen Fahrbahn und Reifen und/oder eine Beladungsänderung (Fz) des Fahrzeuges erkannt wird.

15. Reifendrucküberwachungssystem, in welchem die Raddrehzahl ($\omega$) mindestens eines Rades oder eine Größe, welche mit der Raddrehzahl des Rades zusammenhängt, ermittelt und zur Erkennung eines Reifendruckverlustes ausgewertet wird, **dadurch gekennzeichnet, dass** diese eine Auswerteeinheit umfasst, in welcher ein Verfahren gemäß mindestens einem der Ansprüche 1 bis 14 durchgeführt wird.

## Claims

1. Method for indirect tire pressure monitoring, in which a pressure loss identification variable (X, f, c) is determined for identification of a pressure loss at the tire of the wheel on the basis of an analysis of the oscillation behavior of a wheel of a motor vehicle, **characterized in that** a characteristic variable ($\alpha$, $\alpha$/v), which represents a gradient ($\alpha$) of a wheel torque slip curve, or depends on a gradient ($\alpha$) of a wheel torque slip curve ($\alpha$/v), is determined from the oscillation behavior of the wheel, and **in that** the characteristic variable ($\alpha$, $\alpha$/v) and the pressure loss identification variable (X, f, c) are used for pressure loss identification, wherein the pressure loss identification variable (X, f) is corrected, and/or the pressure loss identification variable (X, f) is determined as a function of the determined characteristic variable ($\alpha$/v).

2. Method according to Claim 1, **characterized in that** the characteristic variable ($\alpha$/v) is determined from a ratio ($A_{ratio}$) of two dimension variables, wherein each dimension variable represents the energy content ($G(f_{eigen1})$, $G(f_{eigen2})$, $E_1$, $E_2$) of the oscillation behavior of the wheel at a frequency ($f_{eigen1}$, $f_{eigen2}$) or in a frequency range ($f_{eigen1}-\Delta f_1$, $f_{eigen1}+\Delta f_1$; $f_{eigen2}-\Delta f_2$, $f_{eigen2}+\Delta f_2$).

3. Method according to at least one of Claims 1 and 2, **characterized in that** a frequency analysis is carried out on the oscillation behavior of the wheel, in particular of an angular velocity signal ($\omega$) from the wheel, and the characteristic variable ($\alpha$/v) is determined from a frequency spectrum (31), which is determined in particular by Fourier transformation.

4. Method according to Claim 3, **characterized in that** the characteristic variable ($\alpha$/v) is determined as a ratio ($A_{ratio}$)

   - of the amplitude values ($G(f_{eigen1})$, $G(f_{eigen2})$) of the frequency spectrum at two predetermined or determined resonant frequencies ($f_{eigen1}$, $f_{eigen2}$), or
   - the energy contents of the frequency spectrum in the region of two predetermined or determined frequency ranges ($f_{eigen1}-\Delta f_1$, $f_{eigen1}+\Delta f_1$; $f_{eigen2}-\Delta f_2$ $f_{eigen2}+\Delta f_2$).

5. Method according to at least one of Claims 1 and 2, **characterized in that** the characteristic variable ($\alpha$/v) is determined from the time profile of an angular velocity signal ($\omega$) from the wheel, in particular by filtering by at least one bandpass filter.

6. Method according to Claim 5, **characterized in that** the angular velocity signal ($\omega$) from the wheel is filtered by at least one bandpass filter, whose cut-off frequencies ($f_{eigen1}-\Delta f_1$, $f_{eigen1}+\Delta f_1$; $f_{eigen2}-\Delta f_2$, $f_{eigen2}+f_2$) are located around a predetermined or determined resonant frequency ($f_{eigen1}$, $f_{eigen2}$), and **in that** the characteristic variable ($\alpha$/v) is determined from the variance of the filtered signal, in particular from a ratio ($A_{ratio}$) of the variances of two signals which have been filtered by bandpass filters with different cut-off frequencies.

7. Method according to Claim 1, **characterized in that** a model-based analysis is carried out of the oscillation behavior of the wheel, in particular of an angular velocity signal ($\omega$) from the wheel, wherein at least one parameter ($J_{rim}$, $J_{radial\ belt}$, c) of the basic model or of the basic model-based equation is determined, in particular by parameter estimation, and **in that** the characteristic variable ($\alpha$/v) is determined from the determined parameter or parameters.

8. Method according to at least one of Claims 1 to 7, **characterized in that** a frequency analysis is carried out of the oscillation behavior of the wheel, in particular of the angular velocity signal ($\omega$) from the wheel, and **in that** the pressure loss identification variable (X) is a resonant frequency ($f_{eigen}$) determined on the basis of the frequency analysis.

9. Method according to Claim 8, **characterized in that** a value of the characteristic variable ($\alpha$/v) is determined for each determined frequency spectrum, and **in that** frequency spectra are averaged using values of the characteristic variable ($\alpha$/v) which are located within a predetermined value range, wherein the pressure loss identification variable ($f_{eigen}$) is determined from the averaged frequency spectrum.

10. Method according to at least one of Claims 1 to 7, **characterized in that** a model-based analysis is carried out of the oscillation behavior of the wheel, in particular of an angular velocity signal ($\omega$) from the wheel, wherein at least one parameter ($J_{rim}$, $J_{radial\ belt}$, c) of the basic model or of the basic model-based equation is determined, in particular by parameter estimation, and **in that** the pressure loss identification variable (X) is a parameter of the model (c) or is determined ($f_{eigen}$) from the parameter or parameters of the model.

11. Method according to at least one of Claims 1 to 10, **characterized in that** a decision is made as a function of the characteristic variable ($\alpha$/v) as to whether or not a pressure loss identification variable (X, f, c) is used for pressure loss monitoring.

12. Method according to at least one of Claims 1 to 11, **characterized in that**, in a learning phase, value pairs are learnt for the characteristic variable ($\alpha$/v) and for the pressure loss identification variable (X, f, c) as comparison values, wherein currently determined value pairs are compared with these comparison values in a pressure loss monitoring phase, in order to identify tire pressure loss.

13. Method according to at least one of Claims 1 to 12, **characterized in that**, in a learning phase, value pairs are learnt for the characteristic variable ($\alpha$/v) and for the pressure loss identification variable (X, f, c), wherein a functional relationship (g) between at least the characteristic variable ($\alpha$/v) and the pressure loss identification variable (X, f, c) is determined from the value pairs, and **in that** a pressure loss identification is carried out in a pressure loss monitoring phase on the basis of a currently determined pressure loss identification variable (X, f, c) and the determined functional relationship (g), in particular with a currently determined pressure loss identification variable (X, f, c) being corrected on the basis of the functional relationship (g).

14. Method according to at least one of Claims 1 to 13, **characterized in that** a gradient ($\alpha$) of the wheel torque slip curve is determined from the characteristic variable ($\alpha$/v), and any change in the coefficient of friction ($\mu$) between the roadway and the tire and/or any load change (Fz) of the vehicle are/is determined on the basis of the gradient ($\alpha$).

15. Tire pressure monitoring system, in which the wheel rotation speed ($\omega$) of at least one wheel, or a variable which is related to the wheel rotation speed of the wheel, is determined and is evaluated for identification of the tire pressure loss, **characterized in that** this comprises an evaluation unit in which a method according to at least one of Claims 1 to 14 is carried out.

**Revendications**

1. Procédé de surveillance indirecte de la pression d'un bandage de roue, dans lequel une grandeur (X, f, c) de détection de perte de pression est déterminée au moyen d'une analyse d'un comportement de vibration d'une roue d'un véhicule automobile pour détecter une perte de pression au niveau du bandage de la roue, **caractérisé en ce qu'**une grandeur caractéristique ($\alpha$, $\alpha$/v) qui représente une pente ($\alpha$) d'une courbe de patinage-couple de rotation de roue ou qui dépend ($\alpha$/v) d'une pente ($\alpha$) d'une courbe de patinage-couple de rotation de roue est déterminée à partir du comportement de vibration de la roue et **en ce que** la grandeur caractéristique ($\alpha$, $\alpha$/v) et la grandeur (X, f, c) de détection d'une perte de pression interviennent dans la détection de la perte de pression, une correction de la grandeur (X, f) de détection de perte de pression et/ou une détermination de la grandeur (X, f) de détection de perte de pression étant réalisée en fonction de la grandeur caractéristique ($\alpha$/v) déterminée.

2. Procédé selon la revendication 1, **caractérisé en ce que** la grandeur caractéristique ($\alpha$/v) est déterminée à partir

d'un rapport ($A_{ratio}$) de deux grandeurs de mesure, chaque grandeur de mesure représentant le contenu en énergie ($G(f_{Eigen1})$, $G(f_{Eigen2})$, $E_1$, $E_2$) du comportement de vibration de la roue à une fréquence ($f_{Eigen1}$, $f_{Eigen2}$) ou dans une plage de fréquences ($f_{Eigen1}-\Delta f_1$, $f_{Eigen1}+\text{A}f_1$ ; $f_{Eigen2}-\Delta f_2$, $f_{Eigen2}+\Delta f_2$).

3.  Procédé selon au moins l'une des revendications 1 ou 2, **caractérisé en ce qu'**une analyse en fréquence du comportement de vibration de la roue, en particulier d'un signal ($\omega$) de vitesse de rotation de la roue est réalisé et la grandeur caractéristique ($\alpha/v$) est déterminée à partir d'un spectre de fréquences (31) déterminé en particulier par transformation de Fourier.

4.  Procédé selon la revendication 3, **caractérisé en ce que** la grandeur caractéristique ($\alpha/v$) est déterminée en tant que rapport ($A_{ratio}$)

    - des valeurs d'amplitude ($G(f_{Eigen1})$, $G(f_{Eigen2})$) du spectre de fréquences à deux fréquences de résonance prédéterminées ou déterminées ($f_{Eigen1}$, $f_{Eigen2}$) ou
    - du contenu en énergie du spectre de fréquences au niveau de deux plages de fréquences prédéterminées ou déterminées ($f_{Eigen1}-\Delta f_1$, $f_{Eigen1}+\Delta f_1$; $f_{Eigen2}-\Delta f_2$, $f_{Eigen2}+\Delta f_{2)}$ .

5.  Procédé selon au moins l'une des revendications 1 ou 2, **caractérisé en ce que** la grandeur caractéristique ($\alpha/v$) est déterminée à partir de l'évolution temporelle d'un signal ($\omega$) de vitesse angulaire de la roue, en particulier par filtrage à l'aide d'au moins un filtre passe-bande.

6.  Procédé selon la revendication 5, **caractérisé en ce que** le signal ($\omega$) de vitesse angulaire de la roue est filtré à l'aide d'au moins un filtre passe-bande dont les fréquences limites ($f_{Eigen1}-\Delta f_1$, $f_{Eigen1}+\Delta f_1$; $f_{Eigen2}-\Delta f_2$, $f_{Eigen2}+\Delta f_2$) sont situées autour d'une fréquence de résonance prédéterminée ou déterminée ($f_{Eigen1}$, $f_{Eigen2}$) et **en ce que** la grandeur caractéristique ($\alpha/v$) est déterminée à partir de la variance du signal filtré, en particulier à partir d'un rapport ($A_{ratio}$) des variances de deux signaux filtrés à l'aide de filtres passe-bande présentant des fréquences limites différentes.

7.  Procédé selon la revendication 1, **caractérisé en ce qu'**une analyse basée sur modèle du comportement de vibration de la roue, en particulier d'un signal ($\omega$) de vitesse angulaire de la roue, est réalisée, au moins un paramètre ($J_{Felge}$, $J_{Gürtel}$, c) du modèle de base ou de l'équation de base basée sur modèle étant déterminé en particulier par estimation des paramètres, et **en ce que** la grandeur caractéristique ($\alpha/v$) est déterminée à partir du ou des paramètres qui ont été déterminés.

8.  Procédé selon au moins l'une des revendications 1 à 7, **caractérisé en ce qu'**une analyse en fréquences du comportement de vibration de la roue, en particulier du signal ($\omega$) de vitesse angulaire de la roue, est réalisée et **en ce que** la grandeur (X) de détection de perte de pression est une fréquence de résonance ($f_{Eigen}$) définie à l'aide de l'analyse en fréquences.

9.  Procédé selon la revendication 8, **caractérisé en ce que** pour chaque spectre de fréquences déterminé, une valeur de la grandeur caractéristique ($\alpha/v$) est déterminée et **en ce que** la moyenne de spectres de fréquences pour lesquels les grandeurs caractéristiques ($\alpha/v$) ont des valeurs situées à l'intérieur d'une plage prédéterminée de valeurs est déterminée, la grandeur caractéristique ($f_{Eigen}$) de perte de pression étant déterminée à partir des spectres de fréquences moyennés.

10. Procédé selon au moins l'une des revendications 1 à 7, **caractérisé en ce qu'**une analyse basée sur modèle du comportement de vibration de la roue, en particulier d'un signal ($\omega$) de vitesse angulaire de la roue, est réalisée, au moins un paramètre ($J_{Felge}$, $J_{Gürtel}$, c) du modèle de base ou de l'équation de base basée sur modèle est déterminé en particulier par estimation des paramètres et **en ce que** la grandeur caractéristique (X) de perte de pression est un paramètre du modèle (c) ou est déterminée ($f_{Eigen}$) à partir du ou des paramètres du modèle.

11. Procédé selon au moins l'une des revendications 1 à 10, **caractérisé en ce qu'**en fonction de la grandeur caractéristique ($\alpha/v$), il est décidé si une grandeur (X, f, c) de détection de perte de pression intervient ou non dans la surveillance de la perte de pression.

12. Procédé selon au moins l'une des revendications 1 à 11, **caractérisé en ce que** dans une phase d'apprentissage, des paires de valeurs de la grandeur caractéristique ($\alpha/v$) et de la grandeur (X, f, c) de détection de perte de pression sont enseignées en tant que valeurs comparatives, dans une phase de surveillance de perte de pression, des paires de valeurs déterminées à cet instant étant comparées à ces valeurs comparatives pour détecter une perte de pression du bandage de roue.

13. Procédé selon au moins l'une des revendications 1 à 12, **caractérisé en ce que** dans une phase d'apprentissage, des paires de valeurs de la grandeur caractéristique ($\alpha$/v) et de la grandeur (X, f, c) de détection d'une perte de pression sont enseignées, une relation fonctionnelle (g) entre au moins la grandeur caractéristique ($\alpha$/v) et la grandeur (X, f, c) de détection de perte de pression étant déterminée à partir des paires de valeurs et **en ce que** dans une phase de surveillance de perte de pression, une détection d'une perte de pression est réalisée à l'aide d'une grandeur (X, f, c) de détection de perte de pression déterminée à cet instant et de la relation fonctionnelle (g) qui déterminée, en particulier une grandeur (X, f, c) de détection de perte de pression définie à cet instant est corrigée à l'aide de la relation fonctionnelle (g).

14. Procédé selon au moins l'une des revendications 1 à 13, **caractérisé en ce qu'**une pente ($\alpha$) de la courbe de patinage-couple de rotation de roue est déterminée à partir de la grandeur caractéristique ($\alpha$/v) et une modification de la valeur de frottement ($\mu$) entre la chaussée et le bandage de roue et/ou une modification (Fz) de la charge du véhicule sont déterminées à l'aide de la pente ($\alpha$).

15. Système de surveillance de la pression de bandage de roue dans lequel la vitesse de rotation ($\omega$) d'au moins une roue ou une grandeur, qui dépend de la vitesse de rotation de la roue, est déterminée et est évaluée pour détecter une perte de pression du bandage de roue,
**caractérisé en ce que** celle-ci comprend une unité d'évaluation dans laquelle un procédé selon au moins l'une des revendications 1 à 14 est exécuté.

ω

1

α / v                    X

2

W

# Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10058140 A1
- EP 0578826 B1
- DE 102005004910 A1
- US 5553491 A
- EP 1640189 A2